# EUROPEAN PATENT SPECIFICATION

(11) **EP 3 167 183 B1**
(45) Date of publication and mention of the grant of the patent: **03.07.2019**
(21) Application number: 15756462.6
(22) Date of filing: 07.07.2015
(51) Int. Cl.: F03D 1/04, F03D 1/06, H02K 1/27, H02K 7/18, H02K 21/04, H02K 21/14

(54) **HIGH-PERFORMANCE WIND MACHINE FOR POWER GENERATION**
HOCHLEISTUNGSFÄHIGE WINDMASCHINE ZUR ENERGIEERZEUGUNG
MACHINE ÉOLIENNE HAUTE PERFORMANCE POUR LA PRODUCTION D'ÉLECTRICITÉ

(30) Priority: 08.07.2014 IT RM20140365
(43) Date of publication of application: 17.05.2017
(73) Proprietor: Di Carlo, Marco, 00143 Roma (IT)
(72) Inventor: Di Carlo, Marco, 00143 Roma (IT)
(86) International application number: PCT/IB2015/055135
(87) International publication number: WO 2016/005904

(56) References cited:
- CN-A- 101 354 014
- DE-C2- 19 608 369
- US-A- 2 616 506
- US-A1- 2004 022 628
- US-A1- 2009 008 945
- US-A1- 2014 145 447

## Description

### Technical Field

The present invention relates to a high-performance wind machine for power generation. Among the current most sustainable technologies that have enabled a relevant development in the field of renewable energies, wind turbines are important.

### Background Art

DE 196 08 369 C2 describes a high-performance machine for generating electrical energy from fluids in motion, the machine being composed of a covering for conveying the flow of the fluids, a single rotor without a rotation pin, the rotor having an inductor and a wing arrangement with multiple blades that are automatically controlled in their inclination in dependence on the flow rate of the conveyed air.

CN 101 354 014 A discloses a wind machine for power generation comprising a supporting base, a rotatable structure on the supporting base and an air conveying covering mounted on the rotatable structure, rollers mounted peripherally on said frame, a rotor being rotatable on the rollers and having a wing arrangement in front and a magnetic induction generator.

US 2014/0145447 A1 relates to a rotary machine suitable to interact with a fluid medium comprising a generator rotor with two parallel rings usable as conductors. US 2009/0224621 A1 relates to a brushless motor with a skew layout for magnets.

US 2,616,506 describes a wind generator protection system comprising a table rotating on ball bearings.

US 2009/0008945 A1 relates to a wind generator and describes conductive ball bearings. All above mentioned wind devices are subject to the law of Betz that defines the limit of the maximum energy extractable from the wind, in conditions of steady, incompressible and non-turbulent flow. According to the law of Betz, no wind turbine can capture more than 59.27% (known as Betz's coefficient) of the kinetic energy contained in a mass of air; the ratio between the extracted power and the maximum power extractable from a practical wind turbine, that is defined as power coefficient (Cp), is about 75%-85% of the Betz's coefficient. Currently, only large horizontal-axis three-blade wind generators have a Cp near to 0.5. Other nonconventional generators are well below those values. Works in the literature, from Lilley, G.M. and Rainbird, W. J. Rep. 102: A preliminary report on the design and performance of ducted windmills, College of Aeronautics, Cranfield, 1956, show that a turbine with a air conveying covering can produce approximately twice the power of the same turbine without said covering.

### Summary of the Invention

The present invention aims to increase the Cp of a wind machine.

Furthermore, an object of the invention is to regularize the motion of the rotor.

Still another object is to avoid turbulent effects downstream of the rotor, in case of great wind intensity, due to consequent decreases in air density.

To achieve the objects indicated above, the invention provides a high-performance wind machine for power generation comprising a supporting base, a rotatable structure on the supporting base, a frame and an air conveying covering both mounted on the rotatable structure, rollers mounted peripherally on the frame, a rotor being rotatable on the rollers and having a wing arrangement in front and a magnetic induction generator, wherein the arrangement wing has a variable pitch by having a plurality of blades that are automatically controlled in their inclination in dependence on the flow rate of the conveyed air.

Advantageously, the rotor has no central shaft, but a front ring and a rear ring both engaging one of said rollers, respectively.

Each blade of the wing arrangement is cantilevered by a pin in a sleeve fixed to the front ring of the rotor so that an opening for passage of the fluid flow is centrally delimited, provided in the pin being a protrusion engaged in a slot of the sleeve acting as a profile cam to change the inclination of the blade wing when the speed of the rotor changes.

Advantageously, the supporting base and the rotatable structure both comprise a series of correspondent coupling arrangements having concentric circular half-rings and spheres and acting as ball bearings.

The concentric half-rings and the spheres are rotatable electrical conductors.

The air conveying covering has a cutout in its front lower part, and slots around its front profile, a fan being mounted inside each roller.

### Brief Description of Drawings

Further features and advantages of the invention will become most apparent from the description of an embodiment of the machine for power generation, illustrated by way of an indicative and not limiting example in the accompanying drawings in which:
- Figure 1 is a general perspective view of an embodiment of a machine for power generation according to the present invention;
- Figure 2 is a perspective view of the machine in Figure 1, but shown with the covering in transparency and its interior partially exploded;
- Figure 3 is a cross-section view made along lines E-E in Figure 5 and shows a supporting base of the machine according to the present invention;
- Figure 4 is a cross-section view made along lines F-F in Figure 5, and shows a rotatable structure on the supporting base shown in Figure 3;
- Figure 5 is a partial cross-section view of the supporting base and the rotatable structure that are shown in Figures 3 and 4, respectively;
- Figure 6 is an enlargement of a part in Figure 5;
- Figure 7 is a partial perspective view similar to that of Figure 2, relevant to the rotor rotatable on rollers;
- Figure 8 is a front view of the rotor shown in Figure 7;
- Figure 9 is a partial side view in an enlarged scale of a detail of the rotor shown in Figures 7 and 8;
- Figure 10 is a front view of a blade of the rotor shown in Figures 7 and 8;
- Figures 11a, b, c, d are cross-section views made along lines A-A, B-B, C-C, D-D in Figure 10;
- Figure 12 is a partial front view limited to the rings of the rotor and its rollers;
- Figure 13 is a partial side view in an enlarged scale of the rotor in Figure 12;
- Figure 14 is a partial side cross-section view in an enlarged scale of the rotor and of the rollers in Figure 12;
- Figure 15 is a general perspective view similar to that in Figure 1, showing the path of fluid threads inside the machine according to the present invention;
- Figure 16 is a partial cross-section view in an enlarged scale of a part of the magnetic structure of the rotor of the machine according to the present invention; and
- Figure 17 is a partial side view of the magnetic structure of the rotor of the machine according to the present invention.

### Description of a preferred embodiment of the invention

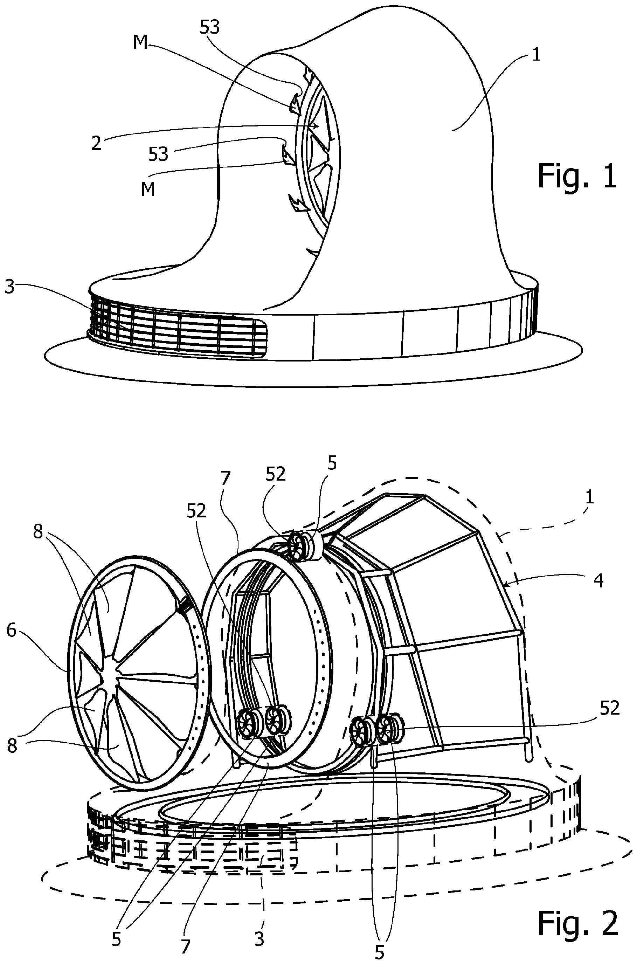

Reference is made initially to Figure 1 which is a general perspective view of an embodiment of a machine for power generation according to the present invention. It has externally a covering 1, which, as will be seen below, is shaped to convey air and produce important depression effects in order to optimize the performance of the machine. The covering 1 has a convergent-divergent profile, and a rotatable rotor 2 is placed in its interior. In order to facilitate the air flow inside the covering 1, the covering 1 has a cutout 3 in its front lower part.

As shown in Figure 2 which is a perspective view of the machine in Figure 1 with the covering in transparency and the interior partially exploded, provided inside the covering 1 is a frame 4, preferably a lattice frame to which rollers generically indicated as 5 are mounted. The rollers 5, which will be described in greater detail below, support a pair of front and rear rings 6, 7 forming part of the rotor 2. Mounted to the front ring 6 are a plurality of blades generally indicated as 8 in a manner that will be described below. Furthermore, the rotor 2 comprises a magnetic structure that will be displayed also in detail later.

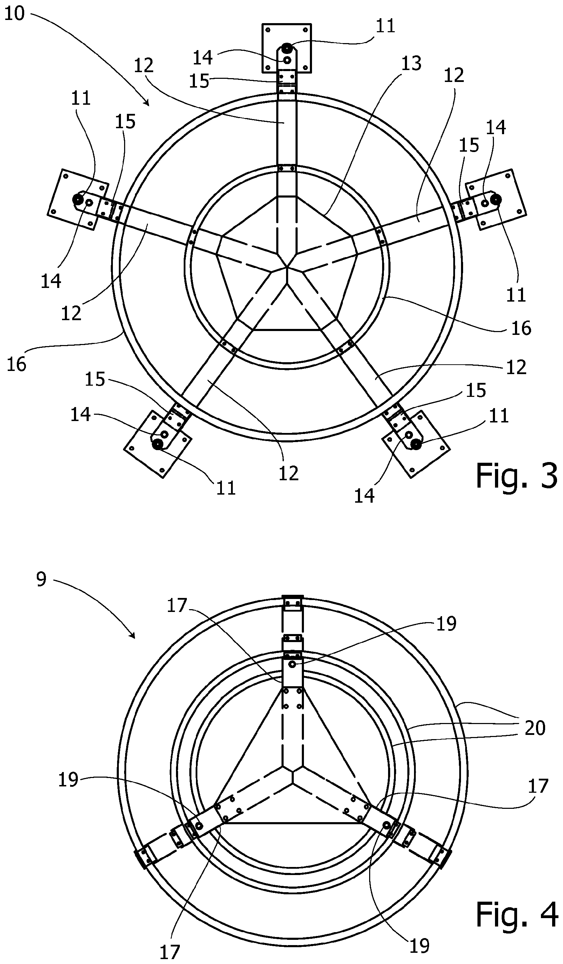

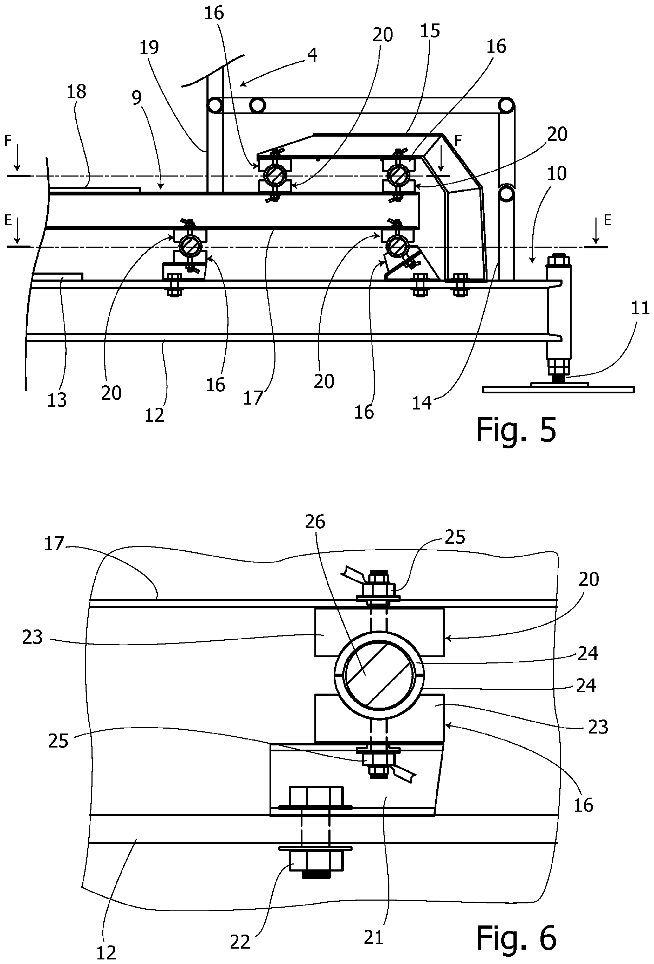

The frame 4 is connected to a structure 9 rotatable on a coaxial supporting base 10 shown in Figure 5, which is a partial cross-section view of the supporting base 10 and the rotatable structure 9, which are represented in greater detail in Figures 3 and 4, respectively.

Reference is made to Figure 3 which is a cross-section view made along lines E-E in Figure 5 and shows the supporting base 10 of the machine according to the present invention. The supporting base 10 comprises support feet generically indicated as 11 for a plurality of support beams 12. The support beams are preferably H-beams and five in number, and are angularly equidistant in a radial pattern. In their end opposite to the support feet 11, the support beams 12 are joined centrally by means of a gusset plate 13. Externally, in the vicinity of the support feet 11, provided on the support beams 12 are fixed uprights 14 which serve to support the rotatable structure 9 through the frame 4 connected thereto. Further, fixed on the same support beams 12 are arms 15 that are also adapted to support the rotatable structure 9 by coupling arrangements having concentric circular half-rings and spheres like those generally indicated as 16 and shown enlarged in Figure 6.

Reference is made now to Figure 4 which is a cross-section view made along the lines F-F in Figure 5, and shows the structure 9 rotatable on the supporting base shown in Figure 3. The rotatable structure 9 comprises a plurality of rotatable beams 17. The rotatable beams 17 are preferably H-beams and in number of three, and are angularly equidistant in a radial pattern. The rotatable beams 17 are joined centrally by means of a rotatable gusset 18. Provided on the rotatable beams 17 are rotatable uprights 19 that are part of the frame 4. The rotatable beams 17 are supported by coupling arrangements 20 having concentric circular half-rings and spheres provided on the beams themselves and in engagement with the corresponding arrangements 16 of the supporting base 10 as shown in an enlarged scale in Figure 6. In particular, each coupling arrangement 16 of the supporting base 10 comprises an anchoring bracket 21 fixed by a bolt 22 to a support beam 12. Fixed on the anchoring bracket 21 by support means 23 is a half-ring 24, namely a torus that is diametrically cut at half of its cross section. The half-ring 24 is connected to each bracket 21 by respective conductive pin and nut 25 with wire terminal.

Similarly, each coupling arrangement 20 of the rotatable structure 9 includes, on support means 23, a half-ring 24 connected to each rotatable beam 17 by respective conductive pin and nut 25 with wire terminal.

Positioned between the half-rings 24 of the coupling arrangements 16 and 20 are conductive spheres 26 for making ball bearings.

The number of these ball bearings, as shown in Figures 3 to 5, is four, two being lower below the rotatable structure 9 and two being upper over the same rotatable structure 9. The two upper ball bearings, as shown in Figure 5, are fixed between the rotatable structure 9 and the arms 15 fixed on the support beams 12 of the supporting base 10.

It should be evident that the number of these ball bearings may be even greater than those shown. It is important that they enable the free rotation of the covering 1, and thus of the rotor 2 contained therein, about the common vertical axis of the supporting base 10 and the rotatable structure 9.

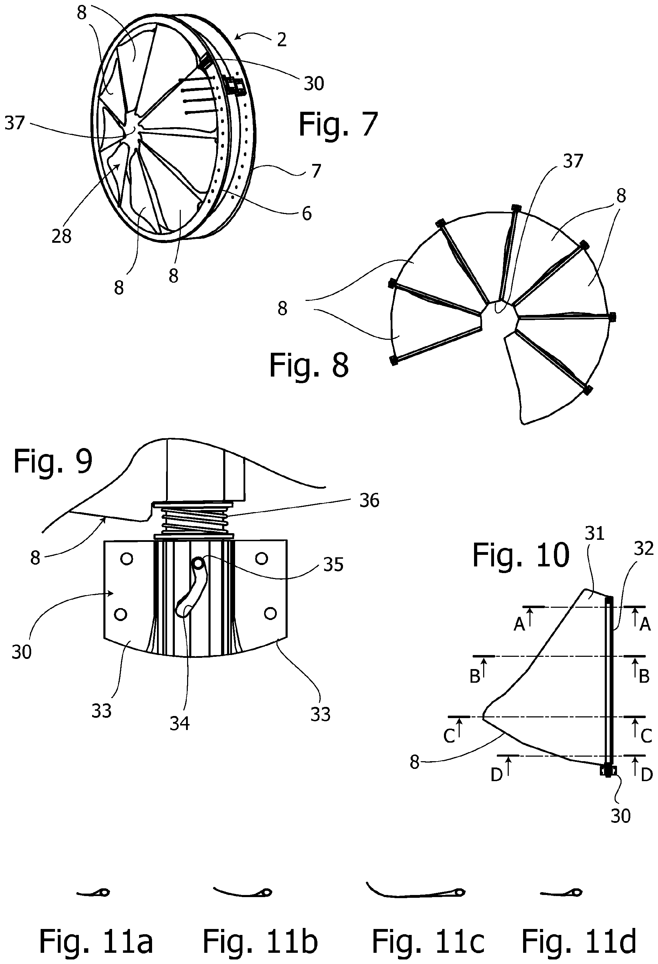

The rotor 2 is shown alone in Figure 7, which is a perspective view similar to that of Figure 2, as for the rotor 2 rotatable on the rollers.

The rotor 2 has in front a multiple blade wing arrangement and a magnetic induction generator.

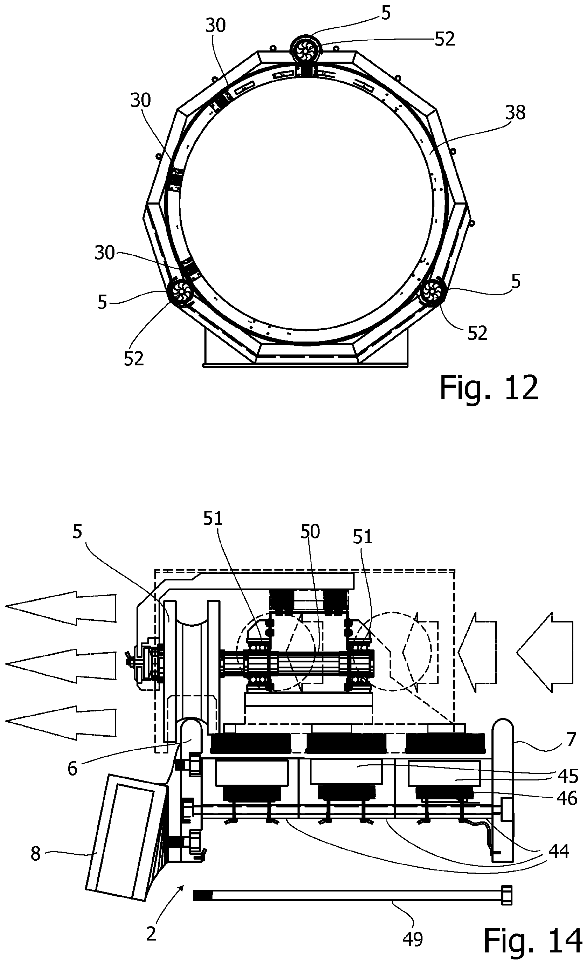

As mentioned with reference to Figure 1, the rotor 2 has a pair of coaxial front and rear rings 6, 7 which allow the rotor to be rotatable on the rollers 5 mounted angularly equidistant on the frame 4, as shown in Figure 1 and in Figure 12, which is a partial front view limited to the rings of the rotor and its rollers. The coaxial rings 6, 7 are conductive and are made of non-magnetic metal isolated with the exception of the surface in contact with the rollers 5.

The multiple blade wing arrangement is indicated as a whole at 28 in Figure 7. It is formed by a plurality of blades individually indicated as 8 and shown in Figure 8, which is a partial front view thereof.

Each blade 8 is cantilevered on the front ring 6 by means of a sleeve 30, which is shown individually in Figure 7 and is represented in a partial enlarged scale in Figure 9. A blade 8 is shown in Figure 10 in a side view. It comprises a wing element 31 that is generally shaped like a triangle, and a pin 32, on which one side of the wing element 31 is wound. The sleeve 30 has side plates 33, 33 that are bored to be fixed to the edge of the front ring 6. Furthermore, centrally formed in the sleeve 30 is a slot 34 which acts as a profile cam for a projection 35 integral with the pin 32 that supports the wing element 31. The wing element 31 is spring loaded at the two ends; only a helical spring 36 is shown as arranged coaxially to the pin 32 between the wing element 31 and the sleeve 30. When the rotation speed of the rotor 2 due to the wind intensity increases, the centrifugal force acts against the helical spring 36 and moves the pin 32 within the sleeve 30. The wing element 31 rotates progressively increasing the pitch of the blades 8. The displacement of the blades 8 towards the periphery of the rotor enlarges the central passage section 37 of the air flow.

Shown in Figures 11a, b, c, d, which are cross-sections views made along lines A-A, B-B, C-C, D-D in Figure 10, is the profile of the wing element 31. The wing elements are made preferably from plastic material and internally reinforced with stiffening cores.

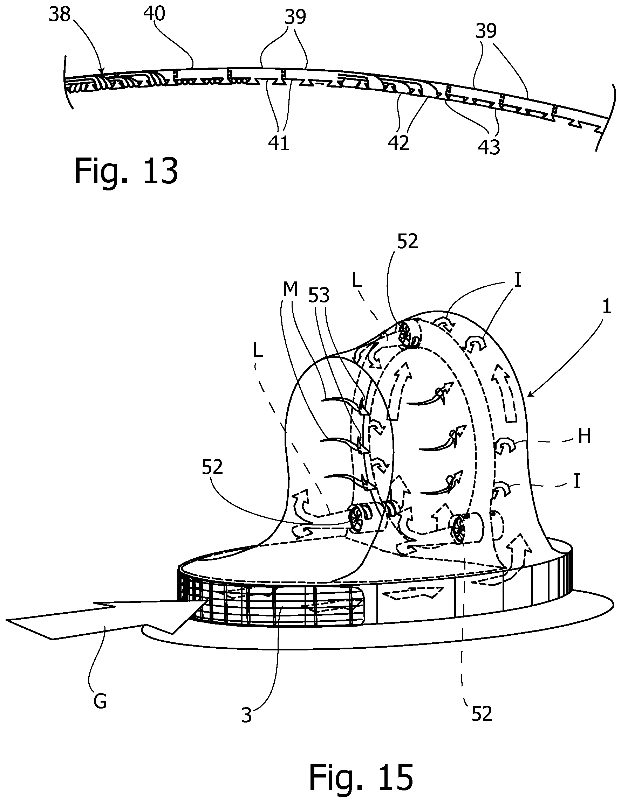

The magnetic induction generator is an isotropic synchronous machine. The stator or armature of the machine is formed in the tubular structure between the two rings 6, 7 of the rotor 2. The stator has a magnetic circuit 38 made by lamination and is composed of modular semi-arch sheets that are superimposed and phase-shifted to each other for making a single laminated core in the direction of magnetization, as in Figure 13. The discs of the core 39 are isolated and glued together. The core 39 has such dimensions as to enter the hollow bearing structure between the rings 6, 7, to which it is assured to not deform. The discs of the core 39 are linear along the outer edge 40 and serrated along the inner profile to make slots 41 housing single or multiple turns 42 that are made from adequate insulated conductors. The slots are lined with fabric or dielectric composite material 43, and the turns 42 run alternately inside. The turns 42 are collected in several sectors and groups depending on the operating environment where the machine is intended. The circuits of turns 42 determine the stages of electricity generation that are managed by tilting the wing elements 31.

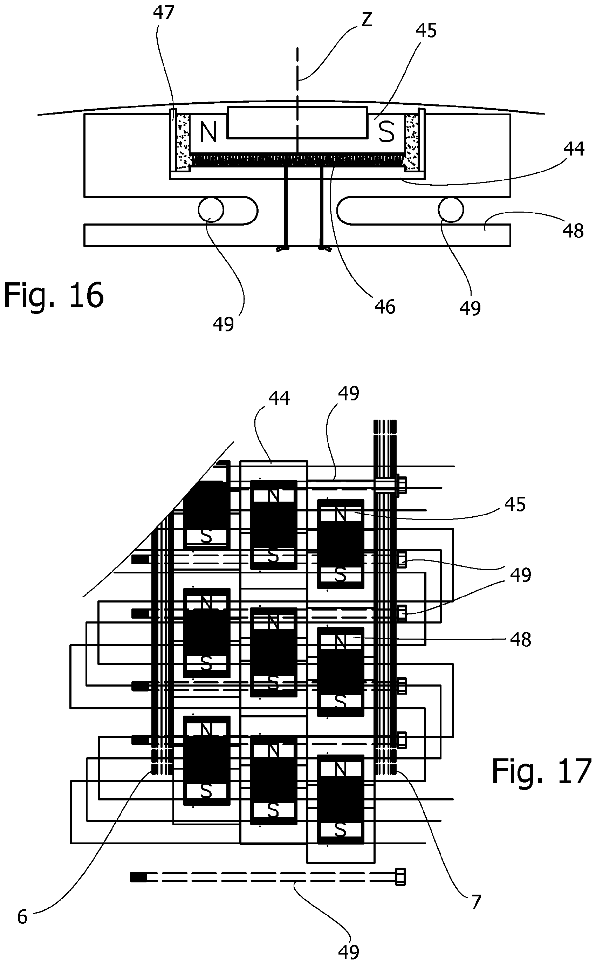

As shown in Figure 14, which is a partial side cross-section view in an enlarged scale of the rotor and of the rollers of Figure 12, the inductor rotor is composed of small bases 44 in insulating dielectric plastic material, disposed consecutively on more staggered rows as shown in Figure 17, which is a partial side view of the magnetic structure of the rotor of the machine according to the present invention. The small bases 44 are inserted between the two rings 6, 7 of the rotor 2. Each small base 44 houses a permanent magnet 45 coupled to a supplementary solenoid 46 which comes into operation at high wind speeds, with a result of significantly increasing the production performance of the machine and participating in the containment of the angular speed of the rotor in the event of extreme intensity of the wind. The supplementary solenoid 46 and the permanent magnet 45 are coupled inductors that are externally covered by sheets in multiple layers 47 as shown in the enlarged detailed view of Figure 16, so as to orient and rectify both the field and the flow in the most convenient way, and encapsulated in the small bases 44. Each small base 44 has two through slots 47, normal to the plane having trace z of the magnetic poles 45, in which isolated bolts 49 connecting the two rings 6, 7 of the rotor pass. As shown in Figure 17 the little bases 44 are arranged on three columns side by side and staggered between them to minimize the effects of the change of magnetic flux and simultaneously induce currents in both directions of orientation of the turns. The machine rotates at an almost constant angular speed, with increasing velocity of the fluid, the control system of the machine, with the pertinent hysteresis, detects an oversized or undersized operation of the rotor and closes or opens the various circuits of turns with a result of increasing the generation of electrical energy. Returning to Figure 14, there is shown in detail the arrangement of rotation of the two rings 6, 7 of the rotor 2 on the rollers 5. The roller 5, shown in the upper part of the machine, is mounted through a shaft 50 on ball bearings 51. The ring 6 engages the groove of the roller 5. As schematically shown in Figures 2 and 12, each roller 5 contains an internal fan 52 which sucks the air in the interior of the covering 1 of the machine toward the outside.

With particular reference to Figure 15, which is a general perspective view similar to that of Figure 1, there is shown the path of the fluid threads of the incoming air through the cutout 3 indicated by the arrow G. This incoming air is warmed when brushing the magnetic induction generator in the rear portion of the covering 1. In this phase, the air passes from a room temperature, for example between 10°C and 40°C, to a temperature of 60°C to 100°C, especially if the covering 1 is sunny, with a consequent volume increase of about 1.5-2 times. This air raises inside the covering 1 according to the arrow H and is recalled to the outside in the air threads I through the fans 52 in the rollers 5, which the air threads I participate to move. This air comes out according threads L and is pushed back into the covering 1 through the slots 53 according to the arrows M. In this way hot air strikes the blades 8 of the rotor 2 with a consequence of improving the yield. The output path through the fans 52 is also indicated by the horizontal arrows in Figure 14.

Wind machines as that described can be inserted in urban private or public context. The Cp of the machine according to the invention, by virtue of the confinement effects thanks to the aerodynamic shape of the covering, is about 0.90 times the Betz's coefficient.

The condition of the generator is automatically adjusted by the modification of the inclination of the blades as explained with reference to Figures 7 to 10. Thanks to the modification of the inclination during rotation, the wing arrangement has a variable pitch to maintain a constant angular speed of the rotor. The wing elements absorb gusts and, as the speed of the wind increases, are tilted so as to preserve the highest production of energy and adjust the speed of rotation of the rotor. The electric generation is progressive and multistage, since it is controlled by sensors of rotation speed of the rotor that are not further described: in function of the energy of the fluid and the angle of the wing elements, first the various groups of armatures then the induction solenoids are inserted. Relevant sound effects are not generated. The machine does not require other than minimal civil works and infrastructures when installed on both a building or a hill and towers and pylons.

## Claims

1. A high-performance wind machine for power generation comprising a supporting base (10), a rotatable structure (9) on the supporting base (10), a frame (4) and an air conveying covering (1) both mounted on the rotatable structure (9), rollers (5) mounted peripherally on said frame (4), a rotor (2) being rotatable on the rollers (5) and having a wing arrangement (28) in front and a magnetic induction generator (38), the air conveying covering (1) having a front lower part and a front profile, the wing arrangement (28) having a variable pitch with a plurality of blades (8) that are automatically controlled in their inclination in dependence on the flow rate of the conveyed air, wherein said rotor (2) has a front ring (6) and a rear ring (7) both engaging one of said rollers (5), respectively, **characterized in that** the air conveying covering (1) has a cutout (3) in its front lower part and slots (53) around its front profile, a fan (52) being mounted inside each roller (5).

2. The machine according to claim 1, wherein each blade (8) of the wing arrangement (28) is cantilevered by a pin (32) in a sleeve (30) fixed to the front ring (6) of the rotor so that an opening for passage of the fluid flow is centrally delimited, provided in the pin (32) being a protrusion (35) engaged in a slot (34) of the sleeve acting as a profile cam to change the inclination of the blade wing (8) when the speed of the rotor (2) changes.

3. The machine according to claim 1, wherein said supporting base (10) and the rotatable structure (9) both comprise a series of correspondent coupling arrangements (16, 20) having concentric circular half-rings (24, 24) and spheres (26) and acting as ball bearings.

4. The machine according to claim 3, wherein said concentric circular half-rings (24, 24) and said spheres (26) are rotatable electrical conductors.

## Patentansprüche

1. Hochleistungsfähige Windmaschine zur Energieerzeugung, umfassend eine Ständerbasis (10), eine drehbare Struktur (9) auf der Ständerbasis (10), einen Rahmen (4) und eine Luftförderungsabdeckung (1), beide montiert auf der drehbaren Struktur (9), Walzen (5), die umfangseitig am Rahmen (4) montiert sind, einen Rotor (2), der auf den Walzen (5) drehbar ist und eine Flügelanordnung (28) an der Vorderseite und einen Magnetinduktionsgenerator (38) aufweist, wobei die Luftförderungsabdeckung (1) einen frontseitigen unteren Teil und ein Frontprofil aufweist, wobei die Flügelanordnung (28) einen variablen Abstand mit einer Vielzahl an Schaufeln (8) aufweist, die automatisch in deren Neigung abhängig von der Strömungsgeschwindigkeit der geförderten Luft gesteuert werden, wobei der Rotor (2) einen frontseitigen Ring (6) und einen rückseitigen Ring (7) aufweist, die beide jeweils in eine der Walzen (5) eingreifen, **dadurch gekennzeichnet, dass** die Luftförderungsabdeckung (1) einen Ausschnitt (3) an ihrem frontseitigen unteren Teil und Aussparungen (53) rund um ihr Frontprofil aufweist, wobei ein Lüfter (52) in jeder Walze (5) montiert ist.

2. Maschine nach Anspruch 1, wobei eine jede Schaufel (8) der Flügelanordnung (28) auskragend von einem Zapfen (32) in einer Hülse (30) getragen wird, fixiert am frontseitigen Ring (6) des Rotors, sodass eine Öffnung für das Durchströmen des Mediumstroms mittig abgegrenzt wird, wobei im Zapfen (32) ein Vorsprung (35) bereitgestellt ist, der in eine Aussparung (34) der Hülse eingreift, wirkend als Profilnocken, um die Neigung des Schaufelflügels (8) zu ändern, wenn sich die Drehzahl des Rotors (2) ändert.

3. Maschine nach Anspruch 1, wobei die Ständerbasis (10) und die drehbare Struktur (9) beide eine Reihe von entsprechenden Kupplungsanordnungen (16, 20) umfassen, aufweisend konzentrische kreisförmige Halbringe (24, 24) und Kugeln (26) und wirkend als Kugellager.

4. Maschine nach Anspruch 3, wobei die konzentrischen kreisförmigen Halbringe (24, 24) und die Kugeln (26) drehbare elektrische Leiter sind.

## Revendications

1. Machine éolienne haute performance pour la production d'électricité comprenant une base de support (10), une structure tournante (9) sur la base de support (10), un châssis (4) et un recouvrement d'alimentation d'air (1) tous deux montés sur la structure tournante (9), des rouleaux (5) montés à la périphérie sur ledit châssis (4), un rotor (2) pouvant tourner sur les rouleaux (5) et comportant un agencement d'aile (28) sur le devant et une génératrice asynchrone magnétique (38), le recouvrement d'alimentation d'air (1) comportant une partie inférieure antérieure et un profil antérieur, l'agencement d'aile (28) comportant un pas variable avec une pluralité de pales (8) étant automatiquement commandées dans leur inclinaison en fonction du débit d'air alimenté, dans laquelle ledit rotor (2) comporte un anneau antérieur (6) et un anneau postérieur (7) tous deux se mettant en prise, respectivement, avec l'un desdits rouleaux (5), **caractérisée en ce que** le recouvrement d'alimentation d'air (1) comporte une découpure (3) dans sa partie inférieure antérieure et des fentes (53) autour de son profil antérieur, un ventilateur (52) étant monté à l'intérieur de chaque rouleau (5).

2. Machine selon la revendication 1, dans laquelle chaque pale (8) de l'agencement d'aile (28) est en porte-à-faux par un axe (32) dans un manchon (30) fixé à l'anneau antérieur (6) du rotor de sorte qu'une ouverture soit centralement délimitée pour le passage de l'écoulement de fluide, une saillie (35), engagée dans une fente (34) du manchon étant prévue dans l'axe (32), agissant comme une came à profil pour modifier l'inclinaison de l'aile de pale (8) lorsque la vitesse du rotor (2) change.

3. Machine selon la revendication 1, dans laquelle ladite base de support (10) et la structure tournante (9) comprennent toutes deux une série d'agencements de raccordement (16, 20) correspondants comportant des demi-anneaux circulaires concentriques (24, 24) et des billes (26) agissant comme des roulements à bille.

4. Machine selon la revendication 3, dans laquelle lesdits demi-anneaux circulaires concentriques (24, 24) et lesdites billes (26) sont des conducteurs électriques pivotants.
